# EUROPÄISCHE PATENTSCHRIFT

(11) **EP 1 841 628 B1**
(45) Veröffentlichungstag und Bekanntmachung des Hinweises auf die Patenterteilung: **06.05.2009**
(21) Anmeldenummer: 05794633.7
(22) Anmeldetag: 13.10.2005
(51) Int. Cl.: B60R 21/34, B60S 1/04

(54) **PRE-SAFE-AKTIVIERUNG EINES FAHRZEUGS**
PREVENTIVE SAFETY ACTIVATION IN A VEHICLE
ACTIVATION DE SECURITE PREVENTIVE DANS UN VEHICULE

(30) Priorität: 02.12.2004 DE 102004058176
(43) Veröffentlichungstag der Anmeldung: 10.10.2007
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/EP2005/055211
(87) Internationale Veröffentlichungsnummer: WO 2006/058804

(56) Entgegenhaltungen:
- DE-A1- 10 021 142
- DE-A1- 10 261 870
- DE-A1- 10 305 857
- DE-A1- 19 843 042
- DE-A1- 19 954 637

## Beschreibung

Die Erfindung betrifft ein Verfahren zum Auslösen und Überführen eines Fahrzeugs, insbesondere eines Kraftfahrzeugs, in einen Pre-Safe-Zustand zur Erhöhung der passiven Sicherheit eines Unfallgegners, insbesondere eines Fußgängers oder einer Fahrradfahrerin.

Nach WHO-Angaben sterben jedes Jahr 1,26 Millionen Menschen im Straßenverkehr, wobei es in der EU rund 40 000 Tote und 1,6 Millionen Verletzte jährlich gibt. Für eine Erhöhung der Verkehrssicherheit und somit auch für eine Verringerung der Opferzahlen im Straßenverkehr sind dabei Systeme interessant, die sich an der Schnittstelle zwischen aktiver und passiver Sicherheit des Fahrzeugs bewegen und die bei unvermeidbaren Unfällen Insassen und Fahrzeug auf einen Anprall vorbereiten und die Verletzungsschwere der Insassen dadurch reduzieren können.

Hierfür nutzen sogenannte Pre-Safe-Systeme, in einer Situation, in welcher ein Unfall wahrscheinlich ist, die Zeit vor dem Unfall des Fahrzeugs derart, dass das Fahrzeug von einem Komfortmodus in einen Sicherheitsmodus wechselt. Der Sicherheitsmodus wird bevorzugt einem kritischen Fahrzustand aktiviert, der z. B. anhand von Signalen eines Anti-Blockier-Systems oder eines ESP-Systems detektierbar ist. Melden die Sensoren eine kritische Fahrsituation, so werden beispielsweise die Gurte straffer gezogen, die Sitze bewegen sich in eine für einen Anprall des Fahrzeugs günstigere Position und für den Fall eines Überschlags des Fahrzeugs schließt sich das Schiebedach, um das Eindringen von Gegenständen zu vermeiden, die die Insassen zusätzlich verletzten könnten.

Ferner sind Pre-Safe-Systeme bekannt, die anhand eines Kontaktsensors, der z. B. in einem Kotflügel oder einer Stoßstange untergebracht ist, bei einer Kollision des Fahrzeugs mit einem Fußgänger oder einem Fahrradfahrer Pre-Safe-Maßnahmen für den Unfallgegner treffen.

So ist aus der DE 103 05 857 A1 eine Scheibenwischvorrichtung für ein Kraftfahrzug offenbart, bei welchem ein Wischhebel bei einem mit einem Kontaktsensor detektierten Anprall eines Fußgängers am Fahrzeug in eine Position unterhalb einer Windschutzscheibe des Fahrzeugs verbracht wird. Hierdurch verschwindet der Wischarm aus einem Gefahrenbereich für den Fußgänger, was dessen Verletzungsrisiko bei einem Anprall an der Windschutzscheibe minimiert. In einer bevorzugten Ausführungsform hebt sich zusätzlich die Motorhaube im Bereich der Windschutzscheibe an, wodurch einerseits mehr Platz für das Verschwinden des Wischhebels geschaffen wird und andererseits mehr Deformationsraum für den verunfallten Fußgänger zur Verfügung steht, der mit den harten Teilen des unter der Motorhaube liegenden Motors nicht mehr oder nicht mehr so stark in Kontakt gerät.

Der Einsatz einer Kontaktsensorik eignet sich vor allem für Fahrzeuge der gehobenen Klassen mit langer Motorhaube. Der Einsatz einer Kontaktsensorik bei kompakten Fahrzeugen mit kurzer Motorhaube (z. B. einem Kleinwagen oder einem Van), insbesondere, wenn der Unfallgegner klein (z. B. ein Kind) ist, eignet sich nicht mehr für obige Konstellationen, da der Zeitraum zwischen einem Auslösen der Kontaktsensorik durch den Unfallgegner und einem Kopfaufprall des Unfallgegners zu kurz ist, um z. B. rechtzeitig die Wischhebel der Scheibenwischvorrichtung abzusenken.

Die DE 100 21142 A1 offenbart ein Verfahren mit den Merkmalen des Oberbegriffs des Anspruchs 1, bei dem im Falle einer Kollision die Kontaktkräfte bei im Aufprallbereich angeordneten verformungssteifen Funktionsteilen des Kraftfahrzeugs reduziert werden können. Aus der DE 103 05 857 A1 ist ein Scheibenwischvorrichtung bekannt, bei welchem ein Wischhebel bei einem mit einem Kontaktsensor detektierten Anprall eines Fußgängers am Fahrzeug in eine Position unterhalb einer Windschutzscheibe des Fahrzeugs verbracht wird. DE 102 61 870 A1 offenbart ein Kraftfahrzeug mit einem bei einer Fußgängerkollision aus einer Normalstellung in eine angehobene Stellung bewegbaren Deckel oder Deckelteil, sowie der Möglichkeit einer Rückführung des Deckels oder Deckelteils aus der angehobenen Stellung in die Normalstellung. In der DE 199 54 637 A1 wird eine Kraftfahrzeug offenbart, an dem im frontseitigen Bereich ein Sensor installiert ist, der bei einem Aufprall ab einem bestimmten Druck automatisch einen Bremsvorgang auslöst. In der DE 198 43 042 A1 ist eine Wischvorrichtung offenbart, die im Falle von Kollisionen mit Fußgängern außerhalb des Kopfaufschlagbereichs liegt und somit keine Verletzungsgefahr darstellt.

Aufgabe der Erfindung ist es, Pre-Safe-Maßnahmen eines Fahrzeugs derart zu bestimmen und zu initiieren, dass einerseits eine hohe passive Sicherheit des Unfallgegners und andererseits ein hoher Grad an Reversibilität der Aktuatorik ermöglicht wird.

Die Aufgabe der Erfindung wird mit einem Verfahren gemäß Anspruch 1 gelöst. Bevorzugte Weiterbildungen sind in den abhängigen Ansprüchen angegeben.

Gemäß der Erfindung wird in einer Situation, in welcher sich ein Unfall mit einer gewissen Wahrscheinlichkeit in einer nahen Zukunft abzeichnet, sich das Fahrzeug auf eine drohende Kollision vorbereitet. Diese einem Unfall unmittelbar vorausgehende Zeit kann drei Sekunden und mehr betragen, die für das Initiieren eines Pre-Safe-Zustands des Fahrzeugs auch für den Unfallgegner genutzt werden kann. Hierbei werden Sensorinformationen des Fahrzeugs verwendet, die eine hohe Unfallwahrscheinlichkeit des Fahrzeugs mit einem Dritten anzeigen können, womit eine Auslösebedingung des Pre-Safe-Zustands des Fahrzeugs generiert wird. Dieser sogenannte Fußgänger-Pre-Safe-Zustand des Fahrzeugs wird wenigstens teilweise vor dem ersten Anprall des Dritten vom Fahrzeug eingenommen, wobei z. B. ein Teil oder ein Abschnitt des Fahrzeugs aus einem unfallträchtigen Bereich entnommen wird oder zusätzlich abgeschirmt wird, was das Verletzungsrisiko des Dritten erheblich minimieren kann.

Durch ein Verlängern des Zeitfensters zum Einnehmen des Fußgänger-Pre-Safe-Zustands des Fahrzeugs ist es möglich, aufgrund der im Vergleich zum Stand der Technik zusätzlich zur Verfügung stehenden Zeit, umfassende Pre-Safe-Maßnahmen für Fußgänger o. a. am Fahrzeug zu ergreifen. Ferner können je nach Pre-Safe-Maßnahme, diese vergleichsweise langsam und somit sanft und geräuscharm initiiert werden. Darüber hinaus können bereits vorhandene, vorausschauende Sensorsysteme zur Aktivierung des Pre-Safe-Zustands genutzt werden.

In einer bevorzugten Ausführungsform der Erfindung führt das Fahrzeug zusätzlich eine automatisch ausgelöste und bevorzugt auch automatisch gesteuerte Vollbremsung durch. Hierdurch ist es einerseits möglich, einen drohenden Unfall vielleicht vollständig zu verhindern, da die Reaktionszeitspanne der Fahrzeugelektronik im Vergleich zur menschlichen Reaktionszeitspanne viel kürzer ist. Darüber hinaus findet andererseits ein Unfall, der sich nicht vermeiden lässt, mit einer geringeren Geschwindigkeit statt, was eine Verletzungsgefahr eines Dritten erheblich minimiert.

In einer bevorzugten Ausführungsform der Erfindung ist eine solche Fußgänger-Pre-Safe-Maßnahme des Fahrzeugs ein Absenken einer Scheibenwischvorrichtung. Hierbei senkt sich bevorzugt wenigstens ein Wischhebel der Scheibenwischvorrichtung in einen Bereich unterhalb einer gewöhnlichen Ruhelage des Wischhebels ab. Erfindungsgemäß ist eine rechtzeitige Wischhebelabsenkung bei Kollisionen mit kurzen Kopfaufprallzeiten (Zeitspanne zwischen Kollision des Fahrzeugs mit dem Unfallgegner und Auftreffen dessen Kopfs am Fahrzeug) gewährleistet, insbesondere bei Kollision eines Fahrzeugs mit kurzer Fahrzeugfront und einem Kind.

Mittels des erfindungsgemäßen Verfahrens ist es möglich, z. B. die Wischhebel ausschließlich über ein vorrausschauendes Sensorsystem anzusteuern und bei Vorliegen entsprechender Unfallkriterien die Wischhebel der Scheibenwischvorrichtung präventiv aus einem für einen Unfallgegner gefährlichen Bereich zu entfernen, ohne dass ein Kontakt mit dem Unfallgegner stattgefunden hat. Kommt es nun zu einer Kollision, so können die Wischhebel dem Dritten überhaupt nicht mehr gefährlich werden. Eine solche präventive, automatische Wischhebelabsenkung zum Fußgängerschutz ist mit heutiger Wischsystemtechnologie möglich. Zur Wischhebelabsenkung bietet sich der Einsatz von mechatronischen Systemen an, d. h. Wischergestänge mit elektronisch geregelten Reversier-Motoren (Einmotoren- oder Zweimotorentechnik) oder Wischersystemen mit Direktantrieb (WDA mit integrierter Elektronik).

In einer bevorzugten Ausführungsform der Erfindung wird eine Fronthaube des Fahrzeugs anhand der Fußgänger-Pre-Safe-Aktivierungsbedingungen in einem Bereich in der Nähe der Windschutzscheibe angehoben. Dies ermöglicht ein Vergrößern der Knautschzone für den Unfallgegner, der von den harten Motorteilen im Inneren des Fahrzeugs besser abgeschirmt ist.

In einer bevorzugten Ausführungsform der Erfindung verschwindet die Scheibenwischvorrichtung, bevorzugt deren Wischhebel, bei ihrer Abwärtsbewegung unter der sich aufstellenden Fronthaube. Hierbei ist die nach unten gerichtete Bewegung der Scheibenwischvorrichtung und die nach oben gerichtete Bewegung der Fronthaube aufeinander abgestimmt, sodass eine Kollision von Fronthaube und Scheibenwischvorrichtung vermieden wird.

Die Information zum Bestimmen einer Auslösebedingung für den Fußgänger-Pre-Safe-Zustand des Fahrzeugs stammt von wenigstens einem vorausschauenden Sensor. Hierbei ist unter einem vorausschauenden Sensor ein Sensor zu verstehen, der mit einer bestimmten Wahrscheinlichkeit einen drohenden Unfall des Fahrzeugs anzeigen kann. Ein solcher Sensor ist z. B. ein Verzögerungsmesssensor, der bei Detektieren einer Vollbremsung einen drohenden Unfall anzeigt. Genauso kann ein Sensor eines ESP-Systems oder ein Sensor eines Antiblockiersystems einen kritischen Fahrzustand des Fahrzeugs anzeigen. Ferner sind zur Detektierung des Fahrzeugumfelds Radareinrichtungen, Kamerasysteme oder IR-Sensoren geeignet. Sollte eine Radareinrichtung zur Detektierung verwendet werden, so ist ein sog. Short-Range-Radar bevorzugt, das vom Fahrzeug weg ca. 5-10m weit blickt.

Bevorzugt ist eine Kombination einer Mehrzahl von Sensoren, die eine gewisse Unfallwahrscheinlichkeit anzeigen können. So sollte z. B. eine Wischhebelabsenkung dann stattfinden, wenn einerseits ein Sensor einen nahenden Fußgänger und andererseits ein Bremssensor eine Vollbremsung detektiert. Ferner ist dies auch in Verbindung mit einem kritischen Fahrzustand, welcher durch den ESP-Sensor angezeigt wird durchführbar. Darüber hinaus ist eine Wischhebelabsenkung auch nur bei Detektieren einer Vollbremsung möglich, da diese bevorzugt reversibel abläuft.

In der Erfindung wird das Pre-Safe-Aktivierungssystem des Fahrzeugs von einem Kontaktsensor unterstützt, der einen Anprall eines Dritten oder eines Gegenstands detektieren kann. Solche Kontaktsensoren befinden sich z. B. in den Kotflügeln und den Stoßstangen des Fahrzeugs.

Mittels Einsatz eines solchen Kontaktsensors lässt sich die Pre-Safe-Aktivierungsstrategie für den Fußgängerschutz noch perfektionieren. So ist es z. B. beim Detektieren eines Fußgängers in einer kritischen Fahrsituation möglich, die Pre-Safe-Aktivierung des Fahrzeugs einzuleiten und zu Beginnen z. B. die Wischhebel abzusenken, was vergleichsweise langsam, sanft und geräuschlos möglich ist. Detektiert dann das Fahrzeug mittels des Kontaktsensors eine Kollision mit einem Fußgänger, so sollte der Wischermotor maximal bestromt werden, wodurch der Wischhebel schnellstmöglich aus einem Gefahrenbereich verschwindet. Bevorzugt wird hierbei der Wischhebel gegen einen Festanschlag gefahren. Dieses Vorgehen ermöglicht einerseits eine hohe passive Sicherheit des Unfallgegners und andererseits einen hohen Grad an Reversibilität der Aktuatorik. Findet keine Detektion durch den Kontaktsensor statt, so ist es problemlos möglich, den Wischhebel wieder in seine ursprüngliche Ruheposition zurück zu bewegen, ohne dass hierfür ein Zurückstellen per Hand notwendig ist oder eine Werkstätte aufgesucht werden muss. Detektiert aber andererseits der Kontaktsensor eine Kollision, so wird der Wischhebel mit maximaler Geschwindigkeit wegbewegt. Ebenso kann z. B. auch mit der Fronthaube des Fahrzeugs verfahren werden, wobei für eine Fußgänger-Pre-Safe-Aktivierung des Fahrzeugs ohne Signal eines Kontaktsensors Federn zum Auslösen und Stellmotoren zum Zurückbringen der Fronthaube eingesetzt werden können, wohingegen bei einem Signal des Kontaktsensors z. B. eine Sprengpatrone zum Aktivieren der Fronthaube zum Einsatz kommen kann.

Als ein reversibler Aktuator bei einer Fußgänger-Pre-Safe-Aktivierung eignet sich z. B. die Ansteuerung des Wischermotors. Die reversible Wischhebelabsenkung ist notwendig, da nicht nach jeder Fußgänger-Pre-Safe-Aktivierung ein Zusammenstoß auch erfolgt.

In einer bevorzugten Ausführungsform der Erfindung wird die Entscheidung zum Absenken z. B. der Scheibenwischvorrichtung von einer Steuerelektronik des Scheibenwischermotors getroffen, wodurch im Vergleich zu einer herkömmlichen Signalverarbeitung im Fahrzeugcomputer Zeit eingespart werden kann.

Weitere bevorzugte Ausführungsformen der Erfindung ergeben sich aus den übrigen Unteransprüchen.

Die Erfindung wird im Folgenden anhand von Ausführungsbeispielen anhand der beigefügten Zeichnung näher erläutert. In der Zeichnung zeigen:
- Fig. 1: ein Schaubild eines Verfahrens zur Fußgänger-Pre-Safe-Aktivierung eines Fahrzeugs gemäß des Stands der Technik,
- Fig. 2: ein Schaubild eines Verfahrens zur Fußgänger-Pre-Safe-Aktivierung eines Fahrzeugs gemäß der Erfindung,
- Fig. 3: ein Schaubild einer weiteren erfindungsgemäßen Ausführungsform des Verfahrens,
- Fig. 4: ein weiteres Schaubild einer erfindungsgemäßen Ausführungsform des Verfahrens,
- Fig. 5: ein Ausführungsbeispiel einer Fußgänger-Pre-Safe-Aktivierung des Fahrzeugs, bei welchem ein Wischhebel abgesenkt und eine Fronthaube aufgestellt wird, und
- Fig. 6: ein Blockschaltbild zur Positionierung eines Wischhebels mittels einer Steuerelektronik eines Wischermotors.

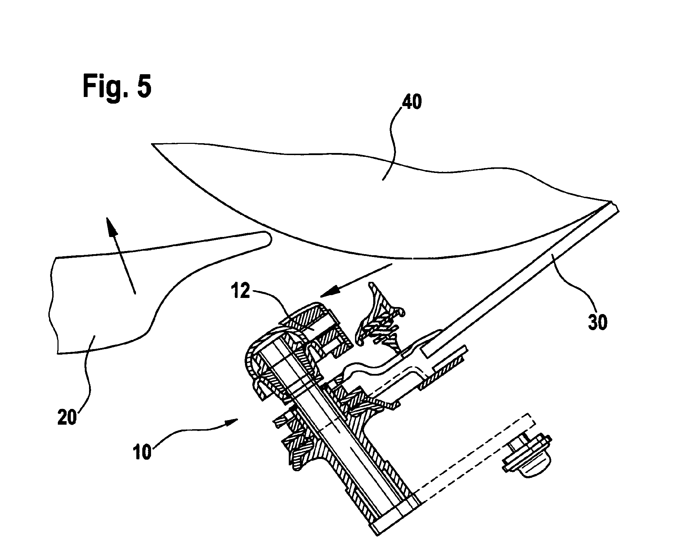

Die folgenden Ausführungen beziehen sich hauptsächlich auf das Absenken eines Wischhebels 12 eines Scheibenwischersystems in eine Position unterhalb seiner tiefsten Ruheposition und/oder das Aufstellen einer Fahrzeugfronthaube 20 bei einer Fußgänger-Pre-Safe-Aktivierung eines Kraftfahrzeugs, also auf eine Anwendung des erfindungsgemäßen Verfahrens auf eine Ausführungsform gemäß der Fig. 5. Es soll jedoch an dieser Stelle darauf hingewiesen werden, dass mittels des erfindungsgemäßen Verfahrens andere passive Schutzmaßnahmen, insbesondere für Fußgänger und Fahrradfahrer, getroffen werden können. So ist es z. B. beim Überführen eines Fahrzeugs in einen Fußgänger-Pre-Safe-Zustand möglich, andere Teile oder Abschnitte des Fahrzeugs, wie z. B. die Fahrzeugantenne, Spiegel und ähnliche hervorspringende Teile, mittels des erfindungsgemäßen Verfahrens aus einem Gefährdungsbereich in einer Unfallsituation für Dritte zu entfernen oder abzuschirmen.

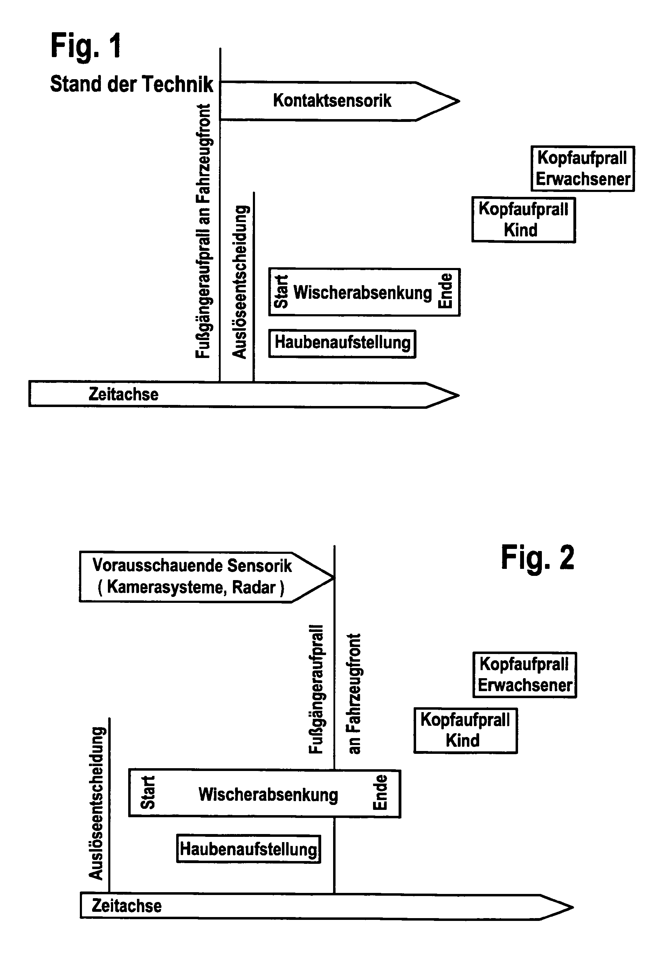

Fig. 1 zeigt ein Schaubild eines Verfahrens gemäß des Stands der Technik zur Wischhebelabsenkung und zur Haubenaufstellung mittels einer Kontaktsensorik, welche sich in einem vorderen Bereich des Fahrzeugs befindet. Zu einem bestimmten Zeitpunkt registriert die Kontaktsensorik einen Anprall eines Fußgängers an einer Fahrzeugfront, wobei unmittelbar danach eine Auslöseentscheidung für die Wischerabsenkung und die Haubenaufstellung getroffen wird. Unmittelbar nach dem Fußgänger-Anprall findet in einer Unfallstandardsituation (Frontalunfall mit einem Fußgänger) ein Aufprall des Kopfs des Fußgängers 40 auf der Motorhaube 20 bzw. auf der Windschutzscheibe 30 statt (s. a. Fig. 5), wobei ein Kopfaufprall eines Kindes oder eines kleinen Menschen zeitlich vor einem Kopfaufprall eines Erwachsenen stattfindet.

Bei Fahrzeugen mit langer Motorhaube 20 und einer Kollision mit einem normal gewachsenen, erwachsenen Fußgänger genügt die zur Verfügung stehende Zeitspanne zwischen Auslösen der Kontaktsensorik und dem Kopfaufprall gerade noch die Scheibenwischhebel 12 abzusenken und die Motorhaube 20 genügend hoch aufzustellen. Ist an einem solchen Unfall ein Fahrzeug mit kurzer horizontaler oder vertikaler Motorhaube 20 (Kleinwagen, Van, Lastwagen) beteiligt und/oder findet ein solcher Unfall mit einem Kind statt, so findet ein Kopfaufprall wesentlich früher statt, wodurch die verbleibende Zeit nicht mehr hinreichend ist, die Wischhebel 12 abzusenken oder auch die Haube genügend weit aufzustellen.

Fig. 2 zeigt eine Ausführungsform des erfindungsgemäßen Verfahrens. Bei der Erfindung wird nun die Auslöseentscheidung oder Auslösebedingung A für eine Wischhebelabsenkung und/oder eine Haubenaufstellung vor einem Anprall eines Dritten 40 an der Fahrzeugfront getroffen. Die hierdurch zusätzlich zur Verfügung stehende Zeit wird jetzt dergestalt genutzt, dass vor dem eigentlichen Anprall des Dritten 40 die Wischhebel 12 oder die gesamte Scheibenwischvorrichtung abgesenkt werden und/oder die Fronthaube 20 in einem Bereich nahe der Windschutzscheibe 30 aufgestellt wird. Findet nun ein Kopfaufprall eines Kindes oder eines Erwachsenen statt(insbesondere bei Fahrzeugen mit kurzer oder vertikaler Motorhaube), so haben sich bereits die Wischhebel aus der Gefahrenzone bewegt und/oder sich die Haube vollständig aufgestellt.

Dies wird vorzugsweise mittels einer vorausschauenden Sensorik realisiert, mit der es möglich ist, eine entsprechende Auslöseentscheidung zu treffen. Ist diese Auslöseentscheidung einmal getroffen, so wird das Fahrzeug in einen Fußgänger-Pre-Safe-Zustand überführt, in welchem sich das Fahrzug auf einen Unfall mit einem außenstehenden Dritten 40 vorbereitet und sich selbst dabei so konfiguriert, dass eine Verletzungsgefahr für diesen Dritten 40 möglichst gering ist. Eine solche vorausschauende Sensorik ist z. B. eine Kamera, ein Radar oder ein IR-Sensor, die in einem nahen Umfeld um das Fahrzeug herum Fußgänger 40 detektieren können. Darüber hinaus eignen sich Sensordaten von ESP-Sensoren (z. B. der Regelbeginn des ESP-Systems, was einen kritischen Fahrzustand anzeigt) oder z. B. von Sensoren eines Antiblockiersystems. Ein Detektieren einer Vollbremsung oder auch ein Stillstehen der Räder (z. B. bei eingeschlagener Lenkung und einem vereisten Untergrund) sind ebenfalls Informationen, die einen drohenden Unfall anzeigen können. Eine Kombination dieser Sensorsignale ist natürlich sinnvoll.

Darüber hinaus ist es beim Einsatz von vorausschauenden Systemen zum Fußgängerschutz, die den Bereich rund um das Fahrzeug überwachen und bei Detektieren eines plötzlich auftauchenden Fußgängers 40 möglich, automatisch eine Vollbremsung auszulösen und gleichzeitig die Wischer 12 abzusenken und/oder die Haube 20 aufzustellen. Dies ermöglicht es einerseits, den Unfall vielleicht sogar auf Grund der sehr kurzen Reaktionszeit durch einen Bordcomputer durch Vollbremsung zu verhindern bzw., wenn dieser unvermeidlich ist, diesen mit einer geringeren Geschwindigkeit stattfinden zu lassen, wodurch eine Verletzungsgefahr für Dritte stark vermindert werden kann.

Da sich ein Unfall nicht mit 100% Sicherheit im Vorfeld detektieren lässt, ist es bei erfindungsgemäßen Ausführungsformen von Vorteil, wenn die getroffenen Maßnahmen reversibel bzw. reversierbar sind. Insbesondere sollten die getroffenen Maßnahmen derart reversibel sein, dass sie automatisch z. B. über einen Elektromotor für die Motorhaube 20 oder über den Wischermotor für die Wischhebelabsenkung oder wenigstens per Hand ohne Einsatz von Werkzeug möglich sind. Bevorzugt bei Scheibenwischvorrichtungen ist der Wischermotor (WSM oder WDA) als reversibler Aktuator angesteuert. D. h. der Wischermotor übernimmt einerseits den normalen Wischbetrieb bei Regen, andererseits ist es ihm möglich, den Wischhebel 12 in dessen Pre-Safe-Lage zu bewegen. Hierbei sollte die reversible Wischhebelabsenkung ohne ein Gegenlaufen gegen einen Festanschlag stattfinden, da, wie oben beschrieben, nicht nach jeder Situationserkennung ein Zusammenstoß mit einem Dritten erfolgt und bei einem Gegenlaufen gegen einen Festanschlag der Wischer 12 beschädigt werden könnte.

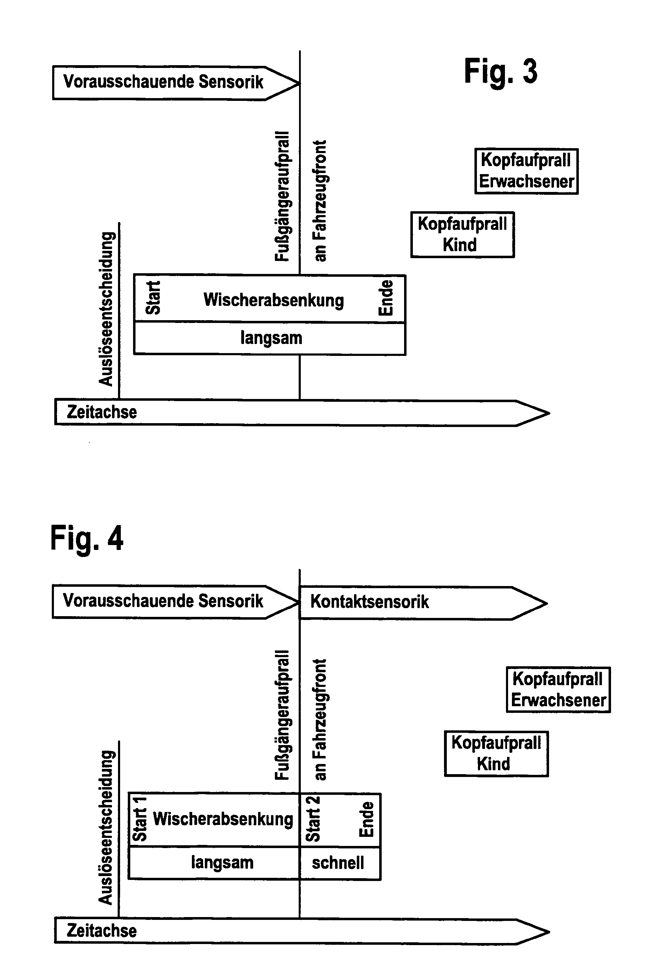

Eine solche Ausführungsform einer reversiblen Wischhebelabsenkung ohne Gegenlaufen gegen einen Festanschlag ist in Fig. 3 dargestellt. Bei einer solchen Ausführungsform wird der Wischer 12 vergleichsweise langsam nach einer positiven Auslöseentscheidung A abgesenkt, wobei die ihm zur Verfügung stehende Zeit ausreicht sich vollständig abzusenken bevor ein Kopfaufprall stattfindet. Eine solche Ausführungsform eignet sich z. B. dann, wenn eine positive Auslöseentscheidung A möglichst früh getroffen wird; wobei diese wiederum stärker fehlerbehaftet ist, als eine spätere Auslöseentscheidung A, bei der weniger Zeit für eine Wischerabsenkung zur Verfügung steht. Da diese Auslöseentscheidung A fehlerbehaftet ist, ist es notwendig, den Wischermotor reversibel anzusteuern.

Eine weitere Ausführungsform der Erfindung stellt Fig. 4 dar, in welcher eine vorausschauende Sensorik mit einer Kontaktsensorik kombiniert ist. Diese Ausführungsform der Erfindung funktioniert wie die eben beschriebenen, nur dass ab dem Zeitpunkt ab dem die Kontaktsensorik eine Kollision meldet, ab einem Zeitpunkt also, ab dem ein Unfall eine Wahrscheinlichkeit von 100% hat, die Geschwindigkeit, mit welcher der Fußgänger-Pre-Safe-Zustand des Fahrzeugs eingenommen wird, erhöht wird bzw. maximal ist. Hierbei wird z. B. der Wischermotor voll bestromt, wobei die Wischhebel 12 sich mit maximaler Geschwindigkeit nach unten bewegen und bevorzugt gegen einen Festanschlag gefahren werden. Ähnlich kann mit der Fronthaube 20 verfahren werden, bei welcher bei Detektion einer Kollision, z. B. Sprengpatronen gezündet werden, die die Fronthaube 20 schnellstmöglich in ihre obere Position bewegen.

Fig. 5 zeigt den Fußgänger 40 nach einer Kollision mit einem Kraftfahrzeug, wobei der Kopf des Fußgängers 40 im ungünstigsten Fall auf eine Windschutzscheibe 30 prallt. In der dargestellten Situation befindet sich das Fahrzeug in seinem Fußgänger-Pre-Safe-Zustand, wobei mittels des erfindungsgemäßen Verfahrens schon vor der Kollision die Motorhaube 20 angehoben wurde und die Wischhebel 12 einer Scheibenwischvorrichtung 10 unterhalb einer Windschutzscheibe 30 positioniert wurden. Daher kann der Kopf des Fußgängers 40 nicht mehr durch einen Wischhebel 12 verletzt werden.

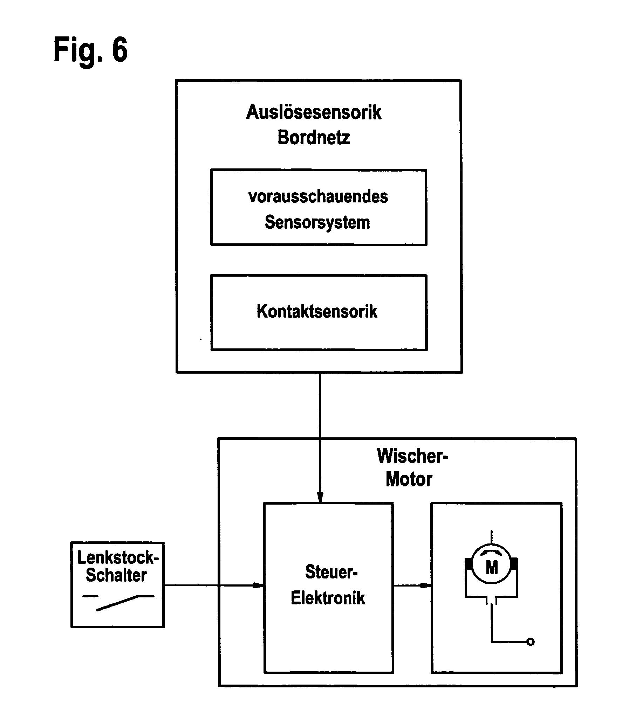

Fig. 6 zeigt ein Blockschaltbild einer erfindungsgemäßen Ausführungsform des Verfahrens, wobei eine Steuerelektronik eines Wischermotors neben den Wischinformationen des Lenkstockschalters ebenfalls die Sensorinformationen des Fahrzeugs eingangsseitig verarbeiten kann. Hierbei entscheidet die Steuerelektronik, ob der Wischhebel 12 in seine Fußgänger-Pre-Safe-Lage abgesenkt wird.

Eine Pre-Safe-Detektierung eines kritischen Fahrzustands des Fahrzeugs ist insbesondere die Detektierung einer Vollbremsung. In einer solchen Situation wird der Wischermotor als reversibler Aktuator angesteuert, wobei das Verarbeiten von Sensor- oder Auslösesignal in der Wischermotorelektronik erfolgt (siehe Fig. 6) hierbei wird die vorhandene Wischsystem-Mechatronik verwendet, die bei einem Wischergestänge mit elektronisch geregeltem Reversiermotor (WSM2M) oder einem Wischerdirektantrieb (WDA) vorliegt. Der Wischerantrieb senkt dabei die Wischhebel 12 in eine tiefere Position ab. Ein wichtiger Faktor ist der Zeitraum, den das Sensorsystem benötigt, um die Auslöseentscheidung A zu generieren. Je größer dieser Zeitraum ist desto mehr Zeit hat der Aktuator bezüglich der Absenkung der Wischhebel 12. Aufgrund der erfindungsgemäß langen Zeitspanne zwischen Detektierung (Vollbremsung) und dem Zusammenstoß mit einem Fußgänger (Kontaktsensorik) können die Wischhebel 12 rechtzeitig abgesenkt werden. Diese Wischhebelabsenkung kann zu Beginn also relativ langsam ohne Auflaufen gegen einen Festanschlag erfolgen. Diese Absenkung ist reversibel und läuft geräuscharm ab. Dies ist notwendig, da nicht nach jeder Situationserkennung ein Zusammenstoß mit einem Fußgänger 40 erfolgt. Nach Detektieren eines Fußgängeraufpralls mittels der Kontaktsensorik muss der Wischermotor voll bestromt und gegen einen Festanschlag gefahren werden, um die Wischhebel 12 schnellstmöglich in deren tiefste Position zu bringen. Da beide beschriebene Unfallsituationen auftreten können, ist es sinnvoll, beide Fälle zu berücksichtigen.

Mittels des erfindungsgemäßen Verfahrens besteht die Möglichkeit durch präventive Maßnahmen die Sicherheit Dritter zu erhöhen und eine möglichst hohe passive Sicherheit zu gewährleisten.

Bevorzugt ist eine erfindungsgemäße Wischhebelabsenkung in sämtlichen Zuständen der Wischhebel 12 möglich. Insbesondere sollte dies in den Ruhephasen des Wischers (auch in erweiterter Parklage oder Intervallparklage) möglich sein. Ferner ist es sinnvoll, für den Fall einer Fußgänger-Pre-Safe-Aktivierung des Fahrzeugs ein eventuelles Wischen der Scheibenwischer zu unterdrücken, damit bei einem Aufprall eines Fußgängers sich die Wischhebel nicht auf der Windschutzscheibe befinden. Andererseits, um die Sicherheit der Fahrzeuginsassen nicht zu gefährden, ist es denkbar, z.B. bei Starkregen trotz Wischhebelabsenkung ein Weiterwischen der Wischerblätter zu gewährleisten, damit der Fahrer für Ausweichmanöver noch genügend Sicht hat und erst bei Auslösen der Kontaktsensorik ein Wischen, bevorzugt in einer Ruhelage der Wischhebel 12, einzustellen.

## Patentansprüche

1. Verfahren zum Auslösen und Überführen eines Fahrzeugs in einen Fußgänger-Pre-Safe-Zustand zur Erhöhung der passiven Sicherheit eines Unfallgegners, bei welchem eine Auslösebedingung (A) des Fußgänger-Pre-Safe-Zustands des Fahrzeugs aufgrund eines Signals wenigstens eine Fahrzeugsensoreinrichtung generiert wird, das eine hohe Unfallwahrscheinlichkeit des Fahrzeugs, insbesondere mit einer Fußgängerin oder einem Fahrradfahrer, für eine unmittelbar bevorstehende Zeitspanne anzeigen kann, und
bei Vorliegen einer positiven Auslösebedingung (A = +) des Fußgänger-Pre-Safe-Zustands, ein Teil oder ein Abschnitt des Fahrzeugs, welcher dem Unfallgegner im Fall eines Unfalls mit dem Fahrzeug zusätzlichen körperlichen Schaden zufügen könnte, aus einem Bereich eines wahrscheinlichen Aufpralls des Unfallgegners verbracht und/oder zusätzlich abgeschirmt wird, wodurch das Fahrzeug wenigstens teilweise in den Fußgänger-Pre-Safe-Zustand überführt wird,
**dadurch gekennzeichnet, dass** die positive Auslösebedingung (A = +) ein erstes Signal und ein zweites Signal aufweist, wobei bei dem ersten Signal, das ein vorausschauenden Sensor der Fahrzeugsensoreinrichtung generiert, der einen Teil oder einen Abschnitt des Fahrzeugs in den vorläufigen Fußgänger-Pre-Safe-Zustand übergeführt wird und wobei bei dem zweiten Signal, das ein Kontaktsensor der Fahrzeugsensoreinrichtung generiert, der einen Teil oder einen Abschnitt des Fahrzeugs aus den vorläufigen Fußgänger-Pre-Safe-Zustand in den Fußgänger-Pre-Safe-Zustand übergeführt wird.

2. Verfahren gemäß Anspruch 1, wobei das Fahrzeug zusätzlich eine automatisch ausgelöste Vollbremsung durchführt.

3. Verfahren gemäß Anspruch 1 oder 2, wobei eine Scheibenwischvorrichtung (10), bevorzugt ein Wischhebel (12) eines Frontscheibenwischers, bei Überführen des Fahrzeugs in den Fußgänger-Pre-Safe-Zustand wenigstens teilweise in einen Bereich unterhalb ihrer Funktionsposition abgesenkt wird.

4. Verfahren gemäß einem der Ansprüche 1 bis 3, wobei zum Erzeugen von zusätzlichem Deformationsraum für den Unfallgegner eine Fronthaube (20) des Fahrzeugs bei Überführen des Fahrzeugs in den Fußgänger-Pre-Safe-Zustand, in einem Bereich, welcher nahe an der Windschutzscheibe (30) liegt, angehoben wird.

5. Verfahren gemäß Anspruch 4, wobei der Wischhebel (12) bei seiner Abwärtsbewegung unter der sich aufstellenden Fronthaube (20) wenigstens teilweise verschwindet und bevorzugt zum Vermeiden einer Kollision zwischen Wischhebel (12) und Fronthaube (20) das Aufstellen der Fronthaube (20) und das Abtauchen des Wischhebels (12) zeitlich aufeinander abgestimmt sind.

6. Verfahren gemäß einem der Ansprüche 1 bis 5, wobei eine Information zum Erzeugen der Auslösebedingung (A) von wenigstens einem Signal des zeitlich vorausschauenden Sensors oder einer Verknüpfung von einer Mehrzahl von Signalen von vorausschauenden Sensoren stammt, wobei wenigstens einer der vorausschauenden Sensoren ein Verzögerungsmesssensor, ein Radsensor, ein Sensor eines Antiblockiersystems, ein IR-Sensor, ein ESP-Sensor, ein Kamerasystem oder eine Radareinrichtung ist.

7. Verfahren gemäß einem der Ansprüche 1 bis 6, wobei ein hinreichendes Kriterium für das Auslösen des Fußgänger-Pre-Safe-Zustands des Fahrzeugs eine starke Verzögerung des Fahrzeugs, insbesondere eine Vollbremsung, oder ein kritischer Fahrzustand des Fahrzeugs zusammen mit der Detektion einer Person außerhalb des Fahrzeugs ist.

8. Verfahren gemäß einem der Ansprüche 1 bis 7, wobei das zweite Signal des Kontaktsensors, insbesondere zum Detektieren eines Fußgängeraufpralls, während des Übergangs des Fahrzeugs in den Fußgänger-Pre-Safe-Zustand berücksichtigt wird und bei Detektieren eines Aufpralls mittels des Kontaktsensors, der Teil oder der Abschnitt des Fahrzeugs, welcher dem Unfallgegner im Fall eines Unfalls mit dem Fahrzeug zusätzlichen körperlichen Schaden zufügen könnte, bevorzugt der Wischhebel (12), mit maximaler Geschwindigkeit aus dem Gefährdungsbereich weg und bevorzugt gegen einen Festanschlag gefahren wird.

9. Verfahren gemäß einem der Ansprüche 1 bis 8, wobei die für den Fußgänger-Pre-Safe-Zustand initiierbaren Maßnahmen für das Fahrzeug, insbesondere dann, wenn die Erkennungssicherheit eines Fußgängeraufpralls unter 100% liegt, für das Fahrzeug, bevorzugt unmittelbar nach einem Beinaheunfall, reversibel sind.

10. Verfahren gemäß einem der Ansprüche 3 bis 9, wobei eine Entscheidung zum Absenken des Wischhebels (12) in den Fußgänger-Pre-Safe-Zustand von einer Steuerelektronik des Scheibenwischermotors getroffen wird.

## Claims

1. Method for triggering and transferring a vehicle into a pedestrian pre-safe state in order to increase the passive safety of another party in an accident, in which a triggering condition (A) of the pedestrian pre-safe state of the vehicle is generated on the basis of a signal from at least one vehicle sensor device which can indicate a high accident probability of the vehicle, in particular with a female pedestrian or a cyclist, for a directly imminent time period, and if a positive triggering condition (A = +) of the pedestrian pre-safe state is met, a part or a section of the vehicle which could, in the case of an accident with the vehicle, cause additional physical injury to the other party in the accident, is moved out of a region of a probable impact of the other party in the accident and/or is additionally screened, as a result of which the vehicle is transferred at least partially into the pedestrian pre-safe state,
**characterized in that** the positive triggering condition (A = +) has a first signal and a second signal, wherein, in the case of the first signal which is generated by a predictive sensor of the vehicle sensor device, which sensor transfers a part or a section of the vehicle into the preliminary pedestrian pre-safe state, and wherein, in the case of the second signal which is generated by a contact sensor of the vehicle sensor device, which sensor transfers a part or a section of the vehicle from the preliminary pedestrian pre-safe state into the pedestrian pre-safe state.

2. Method according to Claim 1, wherein the vehicle additionally carries out an automatically triggered full braking operation.

3. Method according to Claim 1 or 2, wherein a windscreen wiping device (10), preferably a wiper lever (12) of a front windscreen wiper, is at least partially lowered into a region below its function position when the vehicle is transferred into the pedestrian pre-safe state.

4. Method according to one of Claims 1 and 3, wherein, in order to generate additional deformation space for the other party in the accident, a front bonnet (20) of the vehicle is raised into a region which is near to the windscreen (30) when the vehicle is transferred into the pedestrian pre-safe state.

5. Method according to Claim 4, wherein during the downward movement of the wiper lever (12), said wiper lever at least partially disappears under the front bonnet (20) which lifts up, and the lifting up of the front bonnet (20) and the dipping down of the wiper lever (12) are preferably synchronized with one another in order to avoid a collision between the wiper lever (12) and the front bonnet (20).

6. Method according to one of Claims 1 to 5, wherein information for generating the triggering condition (A) originates from at least one signal of the chronologically predictive sensor or from logical combination of a plurality of signals of predictive sensors, wherein at least one of the predictive sensors is a deceleration meter sensor, a wheel sensor, a sensor of an anti-lock brake system, an infrared sensor, an ESP sensor, a camera system or a radar device.

7. Method according to one of Claims 1 to 6, wherein a sufficient criterion for the triggering of the pedestrian pre-safe state of the vehicle is severe deceleration of the vehicle, in particular a full braking operation, or a critical state of the vehicle together with the detection of a person outside the vehicle.

8. Method according to one of Claims 1 to 7, wherein the second signal of the contact sensor is taken into account in order, in particular, to detect a pedestrian impact during the transition of the vehicle into the pedestrian pre-safe state, and when an impact is detected by means of the contact sensor, the part or the section of the vehicle which, in the case of an accident with the vehicle, could cause additional physical injury to the other party in the accident, preferably the wiper lever (12), is moved away at maximum speed from the hazardous region and is preferably moved against a fixed stop.

9. Method according to one of Claims 1 to 8, wherein the measures for the vehicle which can be initiated for the pedestrian pre-safe state are reversible, in particular if the detection reliability of a pedestrian impact is below 100%, preferably directly after an accident almost occurs.

10. Method according to one of Claims 3 to 9, wherein the decision to lower the wiper lever (12) into the pedestrian pre-safe state is taken by an electronic control system of the windscreen wiper motor.

## Revendications

1. Procédé de déclenchement et de transfert d'un véhicule dans un état de pré-sécurisation des piétons en vue d'augmenter leur protection passive en cas d'accident,
dans lequel une condition de déclenchement (A) de l'état de pré-sécurisation des piétons pour le véhicule est formée à partir d'un signal d'au moins un système de détecteurs du véhicule, lequel signal peut indiquer une haute probabilité d'accident pour le véhicule, en particulier avec une piétonne ou un cycliste pendant un intervalle de temps immédiatement antérieur,
dans lequel, si la condition de déclenchement de l'état de pré-sécurisation des piétons est positive (A = +), une partie du véhicule qui pourrait infliger à la victime des dommages corporels supplémentaires en cas d'accident avec le véhicule est sortie d'une zone de collision probable avec la victime d'accident et/ou reçoit une protection supplémentaire, ce qui place le véhicule au moins partiellement dans l'état de pré-sécurisation des piétons,
**caractérisé en ce que**
la condition positive de déclenchement (A = +) présente un premier signal et un deuxième signal,
le premier signal formé par un détecteur prédictif du système de détecteurs du véhicule amène ladite partie du véhicule à être transférée dans l'état provisoire de pré-sécurisation des piétons et
**en ce que** le deuxième signal formé par un détecteur de contact du système de détecteurs du véhicule amène ladite partie du véhicule à être transférée de l'état provisoire de pré-sécurisation des piétons à l'état de pré-sécurisation des piétons.

2. Procédé selon la revendication 1, dans lequel le véhicule exécute de plus un freinage complet déclenché automatiquement.

3. Procédé selon les revendications 1 ou 2, dans lequel un dispositif (10) d'essuie-glace et de préférence un bras (12) de l'essuie-glace du pare-brise est abaissé au moins en partie dans une zone située en dessous de sa position de fonctionnement lorsque le véhicule est amené dans l'état de pré-sécurisation des piétons.

4. Procédé selon l'une des revendications 1 à 3, dans lequel, pour former un espace supplémentaire de déformation pour la victime d'un accident éventuel, le capot avant (20) du véhicule est relevé dans une zone proche du pare-brise (30) lorsque le véhicule est amené dans l'état de pré-sécurisation des piétons.

5. Procédé selon la revendication 4, dans lequel lors de son déplacement vers le bas, le bras (12) de l'essuie-glace disparaît au moins en partie en dessous du capot avant (20) qui s'est relevé et pour éviter une collision entre le bras (12) de l'essuie-glace et le capot avant (20), le relèvement du capot avant (20) et l'abaissement du bras (12) de l'essuie-glace sont de préférence synchronisés l'un avec l'autre.

6. Procédé selon l'une des revendications 1 à 5, dans lequel une information de formation de la condition de déclenchement (A) provient d'au moins un signal du détecteur prédictif ou d'une association de plusieurs signaux de détecteurs prédictifs, au moins l'un des détecteurs prédictifs étant un détecteur de mesure du ralentissement, un détecteur de roue, un détecteur d'un système antiblocage, un détecteur IR, un détecteur ESP, un système de caméra ou un dispositif radar.

7. Procédé selon l'une des revendications 1 à 6, dans lequel un critère suffisant du déclenchement de l'état de pré-sécurisation des piétons pour le véhicule est un fort ralentissement du véhicule, en particulier un freinage complet, ou un état critique de roulage du véhicule, conjoints à la détection d'une personne située à l'extérieur du véhicule.

8. Procédé selon l'une des revendications 1 à 7, dans lequel le deuxième signal du détecteur de contact, en particulier destiné à détecter une collision avec un piéton, est pris en compte lorsque le véhicule est amené dans l'état de pré-sécurisation des piétons et, lors de la détection d'une collision au moyen du détecteur de contact, ladite partie du véhicule qui pourrait infliger des dommages corporels supplémentaires à une victime d'un accident avec le véhicule, de préférence le bras (12) de l'essuie-glace, est éloigné à la vitesse maximale de la zone de risque, de préférence contre une butée fixe.

9. Procédé selon l'une des revendications 1 à 8, dans lequel les dispositions qui peuvent être lancées sur le véhicule pour l'amener dans l'état de pré-sécurisation des piétons sont réversibles, en particulier lorsque la certitude de détection d'une collision du véhicule avec un piéton est inférieure à 100 %, de préférence immédiatement après un accident évité.

10. Procédé selon l'une des revendications 3 à 9, dans lequel la décision d'abaisser le bras (12) de l'essuie-glace dans l'état de pré-sécurisation des piétons est prise par une électronique qui commande le moteur de l'essuie-glace.
